# EUROPEAN PATENT APPLICATION

(11) **EP 4 647 864 A1**
(43) Date of publication of application: **12.11.2025**
(21) Application number: 24805410.8
(22) Date of filing: 10.09.2024
(51) Int. Cl.: G05D 1/43

(54) **AUTONOMOUS DRIVING METHOD AND SYSTEM, AND MEDIUM, INFRASTRUCTURE-SIDE SERVER AND SMART DEVICE**

(30) Priority: 26.03.2024 CN 202410347102
(71) Applicant: Anhui NIO Autonomous Driving Technology Co., Ltd., Hefei, Anhui 230601 (CN)
(72) Inventor: CHEN, Xiaodong, Shanghai 201803 (CN); REN, Shaoqing, Shanghai 201803 (CN); LIANG, Ji, Shanghai 201803 (CN); CHEN, Kunsheng, Shanghai 201803 (CN)
(74) Representative: Vossius & Partner Patentanwälte Rechtsanwälte mbB
(86) International application number: PCT/CN2024/117984
(87) International publication number: WO 2025/200315

(57) **Abstract**

The disclosure relates to the field of autonomous driving technologies, and in particular, provides an autonomous driving method and system, a medium, a station server, and a smart device, aiming to solve the problem of how to achieve robust autonomous driving capabilities while reducing the cost of individual vehicles and avoiding the waste of vehicle-side resources. The disclosure performs multimodal perception fusion based on data acquired by a plurality of types of sensors that are set at a station, to obtain a target perception result, performs environmental fusion based on the target perception result and an environmental map, to obtain a environmental fusion result, and obtains a trajectory planning result of the smart device based on the environmental fusion result. Driving control on the smart device is implemented based on the trajectory planning result and a safety guard decision result, thus achieving lightweight deployment on the smart device, and also ensuring the safety protection on the smart device. A plurality of different types of smart devices and smart devices with low computing power are applicable, thereby making the trajectory planning result more robust.

## Description

The present application claims priority of CN patent application 202410347102.4 filed on March 26, 2024 with the title "autonomous driving method and system, medium, station server and smart device", the whole content of which is incorporated herein by reference.

### TECHNICAL FIELD

The disclosure relates to the field of autonomous driving technologies, and in particular provides an autonomous driving method and system, a medium, a station server, and a smart device.

### BACKGROUND ART

A scenario-based implementation solution for autonomous driving is attracting more and more attention. In the prior art, a solution of deployment simply on a vehicle is often easy to increase the cost of individual vehicles, and computing resources and sensors are also idle and wasted in many cases.

Accordingly, there is a need for a novel autonomous driving solution to solve the above problems in the art.

### SUMMARY

To overcome the above disadvantages, the disclosure is proposed to provide or at least partially provide a solution to solve the problem of how to achieve robust autonomous driving capabilities while reducing the cost of individual vehicles and avoiding the waste of vehicle-side resources.

In a first aspect, the disclosure provides an autonomous driving method. The method is applied to a station, and includes:
performing multimodal perception fusion based on data acquired by at least two types of sensors that are set at the station, to obtain a target perception result, where the target perception result contains a smart device to be subjected to trajectory planning, and the smart device is in communication connection with the station;
performing environmental fusion based on the target perception result and an environmental map, to obtain an environmental fusion result;
performing trajectory planning on the smart device based on the environmental fusion result, to obtain a trajectory planning result of the smart device; and
sending the trajectory planning result to the smart device, so that the smart device implements an autonomous driving function based on the trajectory planning result.

In a technical solution of the above autonomous driving method, the performing trajectory planning on the smart device based on the environmental fusion result, to obtain a trajectory planning result of the smart device includes:
obtaining state data and scheduling data of the smart device; and
performing trajectory planning on the smart device based on the state data, the scheduling data, and the environmental fusion result, to obtain the trajectory planning result.

In a technical solution of the above autonomous driving method, the obtaining the trajectory planning result includes:
obtaining a planned trajectory and real-time pose of the smart device.

In a technical solution of the above autonomous driving method, the method further includes:
implementing communication connection between the station and the smart device through a wireless link,
where the wireless link has a time synchronization capability.

In a technical solution of the above autonomous driving method, the wireless link is a redundant wireless link; and the method further includes:
implementing the redundant wireless link based on a plurality of different types of wireless communication protocols.

In a technical solution of the above autonomous driving method, the multimodal fusion is implemented by a multimodal fusion module; the environmental fusion is implemented by an environmental fusion module; and the trajectory planning is implemented by a trajectory planning module; and the method further includes:
performing fault monitoring on the sensors, the multimodal fusion module, the environmental fusion module, and the trajectory planning module; and
initiating a fault self-correction mechanism response when a fault occurs on at least one of the sensors, the multimodal fusion module, the environmental fusion module, and the trajectory planning module, and storing fault information corresponding to the fault.

In a technical solution of the above autonomous driving method, the sensors include a plurality of first sensors and a plurality of second sensors;
the performing multimodal perception fusion based on data acquired by at least two types of sensors that are set at the station, to obtain a target perception result includes:
obtaining a first perception feature based on the data acquired by the first sensors;
obtaining a second perception feature based on the data acquired by the second sensors;
performing feature fusion based on the first perception feature and the second perception feature, to obtain a perception fusion feature; and
obtaining the target perception result based on the perception fusion feature.

In a technical solution of the above autonomous driving method, the obtaining the target perception result includes:
obtaining the environmental dynamic target perception result, a static obstacle occupancy result, and a positioning result of the smart device based on the perception fusion feature.

In a technical solution of the above autonomous driving method, the method further includes obtaining the environmental map based on the following steps:
obtaining environmental data of the station based on the data acquired by the sensors;
obtaining static obstacle occupancy data based on the environmental data; and
obtaining the environmental map based on the static obstacle occupancy data.

In a technical solution of the above autonomous driving method, the method further includes:
updating the environmental map based on backflow data,
where the backflow data is data that is acquired by the sensors of the station or the smart device and that is triggered based on a preset rule to flow back.

In a technical solution of the above autonomous driving method, the method further includes:
performing offline calibration or online calibration on the sensors, to obtain extrinsic parameter calibration results of the sensors,
where the extrinsic parameter calibration results are used in the multimodal perception fusion and/or the environmental fusion.

In a second aspect, the disclosure provides an autonomous driving method. The method is applied to a smart device, and includes:
obtaining a trajectory planning result of the smart device that is sent by a station, where the station is in communication connection with the smart device; and
performing driving control on the smart device based on the trajectory planning result, and a safety guard decision result of the smart device, to implement an autonomous driving function of the smart device,
where the safety guard decision result is a result obtained after the smart device performs evaluation and verification of safety control on the trajectory planning result.

In a technical solution of the above autonomous driving method, the performing driving control on the smart device based on the trajectory planning result, and a safety guard decision result of the smart device includes:
performing priority judgment based on the trajectory planning result, and the safety guard decision result of the smart device, to obtain a priority judgment result; and
performing driving control on the smart device based on the priority judgment result, and odometry fusion positioning data of the smart device.

In a technical solution of the above autonomous driving method, the performing driving control on the smart device based on the priority judgment result, and odometry fusion positioning data of the smart device includes:
performing driving control on the smart device based on the trajectory planning result and the odometry fusion positioning data, when a priority of the trajectory planning result is higher than the priority of the safety guard decision result; and
performing driving control on the smart device based on the safety guard decision result and the odometry fusion positioning data, when the priority of the safety guard decision result is higher than the priority of the trajectory planning result.

In a technical solution of the above autonomous driving method, the smart device is in communication connection with the station through a wireless link, where the wireless link has a time synchronization capability; and
the performing driving control on the smart device based on the trajectory planning result and the odometry fusion positioning data includes:
performing time synchronization on the trajectory planning result through the wireless link; and
performing driving control on the smart device based on the trajectory planning result after time synchronization, and the odometry fusion positioning data.

In a technical solution of the above autonomous driving method, the trajectory planning result includes a planned trajectory and real-time pose of the smart device; and
the performing driving control on the smart device based on the trajectory planning result after time synchronization, and the odometry fusion positioning data includes:
performing motion compensation on the real-time pose after time synchronization based on the odometry fusion positioning data, to obtain a compensated real-time pose; and
performing driving control on the smart device based on the compensated real-time pose, and the planned trajectory after time synchronization.

In a technical solution of the above autonomous driving method, the wireless link is a redundant wireless link; and the method further includes:
implementing the redundant wireless link based on a plurality of different types of wireless communication protocols.

In a third aspect, a computer-readable storage medium is provided. The computer-readable storage medium stores a plurality of pieces of program code, where the program code is adapted to be loaded and run by a processor to perform the autonomous driving method in any one of the technical solutions of the above autonomous driving method.

In a fourth aspect, a station server is provided. The station server includes:
at least one processor,
and a memory in communication connection with the at least one processor,
where the memory stores a computer program, which, when executed by the at least one processor, implements the autonomous driving method as described in any one of the technical solutions of the above autonomous driving method.

In a fifth aspect, a smart device is provided. The smart device includes:
at least one processor,
and a memory in communication connection with the at least one processor,
where the memory stores a computer program, which, when executed by the at least one processor, implements the autonomous driving method as described in any one of the technical solutions of the above autonomous driving method.

In a sixth aspect, an autonomous driving system is provided. The autonomous driving system includes the station server in the above station server technical solution, and the smart device in the above smart device technical solution, where the station server is in communication connection with the smart device.

The one or more technical solutions of the disclosure described above have at least one or more of the following beneficial effects:

In the technical solutions of implementing the disclosure, the disclosure performs multimodal perception fusion based on the data acquired by the plurality of types of sensors that are set at the station, to obtain the target perception result, performs environmental fusion based on the target perception result and the environmental map, to obtain the environmental fusion result, performs trajectory planning on the smart device based on the environmental fusion result, to obtain the trajectory planning result of the smart device, and sends the trajectory planning result to the smart device, so that the smart device implements the autonomous driving function based on the trajectory planning result. With the above configuration manner, the disclosure can implement the functions of perception, fusion, planning, etc., for autonomous driving at the station, and can implement the autonomous driving function of the smart device without the need for deploying sophisticated functions such as perception, fusion, and rules, thus avoiding the idle and waste of some computing resources and sensors at the smart device when the autonomous driving function is not used, reducing the cost of individual vehicles, and being suitable for a plurality of different types of smart devices and smart devices with low computing power. Meanwhile, since the station performs multimodal perception fusion based on the data acquired by the plurality of types of sensors, and combines the advantages of the plurality of types of sensors, a variety of different weather and environmental conditions can be adapted to, and the obtained trajectory planning result is more robust. Meanwhile, driving control on the smart device is implemented based on the trajectory planning result sent by the station, and the safety guard decision result, thus achieving lightweight deployment on the smart device, and also ensuring the safety protection on the smart device.

### BRIEF DESCRIPTION OF THE DRAWINGS

The disclosed content of the disclosure will become more readily understood with reference to the accompanying drawings. A person skilled in the art readily understands that: These accompanying drawings are merely for illustrative purposes and are not intended to limit the protection scope of the disclosure. In the drawings:
FIG. 1 is a schematic flowchart of main steps of an autonomous driving method according to an embodiment of the disclosure;
FIG. 2 is a schematic flowchart of main steps of an autonomous driving method according to another embodiment of the disclosure;
FIG. 3 is a schematic diagram of main hardware topology between a station and a smart device according to an implementation of an embodiment of the disclosure;
FIG. 4 is a schematic diagram of main software architecture of a battery swap station according to an implementation of an embodiment of the disclosure;
FIG. 5 is a schematic diagram of main software architecture of a vehicle according to an implementation of an embodiment of the disclosure; and
FIG. 6 is a schematic diagram of a main framework for obtaining an environmental map according to an implementation of an embodiment of the disclosure.

### DETAILED DESCRIPTION OF EMBODIMENTS

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

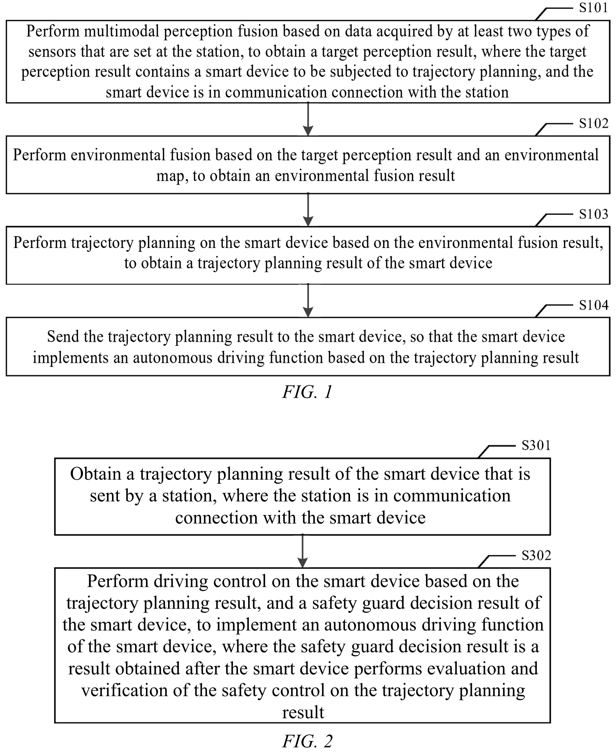

Referring to FIG. 1, which is a schematic flowchart of main steps of an autonomous driving method according to an embodiment of the disclosure. As shown in FIG. 1, the autonomous driving method in this embodiment of the disclosure is applied to a station. The autonomous driving method mainly includes the following steps S101 to S104.

Step S101: Perform multimodal perception fusion based on data acquired by at least two types of sensors that are set at the station, to obtain a target perception result, where the target perception result contains a smart device to be subjected to trajectory planning, and the smart device is in communication connection with the station.

In this embodiment, the station may be provided with a plurality of different types of sensors for acquiring environmental data, and multimodal perception fusion may be performed based on the data acquired by the plurality of different types of sensors, to obtain the target perception result. The target perception result contains the smart device to be subjected to trajectory planning, and the smart device is in communication connection with the station.

In an implementation, the station may be a battery swap station, a charging station, a smart parking lot, or another space where sensors can be installed and deployed.

In an implementation, the smart device may be a driving device, a smart car, a robot, etc.

In an implementation, the smart device to be subjected to trajectory planning may be a vehicle to be subjected to battery swapping, a vehicle to be parked, etc.

In an implementation, the sensors may include lidars, cameras, millimeter wave radars, etc.

In an implementation, a plurality of types of sensors may be deployed based on the functional requirements and coverage of the station and in combination with the performance of different sensors. A plurality of sensors are deployed for each type of sensors. Multimodal perception fusion is performed based on the plurality of types of sensors, so that the robustness of environmental perception for complex weather can be improved, the semantic recognition effect of a perceived target can be enhanced, and the risk of perception performance such as false detection and missed detection can be reduced.

In an implementation, the target perception result may include an environmental dynamic target perception result, a static obstacle occupancy result, and a positioning result of the smart device.

Step S102: Perform environmental fusion based on the target perception result and an environmental map, to obtain an environmental fusion result.

In this embodiment, environmental fusion may be performed based on the target perception result and the environmental map, so as to obtain the environmental fusion result.

In an implementation, the environmental fusion result may include the environmental dynamic target perception result, and a result of fusing the positioning result of the smart device with the environment.

Step S103: Perform trajectory planning on the smart device based on the environmental fusion result, to obtain a trajectory planning result of the smart device.

In this embodiment, trajectory planning may be performed on the smart device based on the environmental fusion result, so as to obtain the trajectory planning result of the smart device.

In an implementation, the trajectory planning result may include a planned trajectory and real-time pose (ego motion) of the smart device.

Step S104: Send the trajectory planning result to the smart device, so that the smart device implements an autonomous driving function based on the trajectory planning result.

In this implementation, the station may send the obtained trajectory planning result to the smart device in communication connection with the station, thereby enabling the smart device to implement the autonomous driving function based on the trajectory planning result.

Based on the above steps S101 to S104, this embodiment of the disclosure performs multimodal perception fusion based on the data acquired by the plurality of types of sensors that are set at the station, to obtain the target perception result, performs environmental fusion based on the target perception result and the environmental map, to obtain the environmental fusion result, performs trajectory planning on the smart device based on the environmental fusion result, to obtain the trajectory planning result of the smart device, and sends the trajectory planning result to the smart device, so that the smart device implements the autonomous driving function based on the trajectory planning result. With the above configuration manner, this embodiment of the disclosure can implement the functions of perception, fusion, planning, etc., for autonomous driving at the station, and can implement the autonomous driving function of the smart device without the need for deploying sophisticated functions such as perception, fusion, and rules, thus avoiding the idle and waste of some computing resources and sensors at the smart device when the autonomous driving function is not used, reducing the cost of individual vehicles, and being suitable for a plurality of different types of smart devices and smart devices with low computing power. Meanwhile, since the station performs multimodal perception fusion based on the data acquired by the plurality of types of sensors, and combines the advantages of the plurality of types of sensors, a variety of different weather and environmental conditions can be adapted to, and the obtained trajectory planning result is more robust.

Steps S101, S102, and S103 are further described below respectively.

In an implementation of this embodiment of the disclosure, the sensors may include a first sensor and a second sensor; and step S101 may further include the following steps S1011 to S1014.

Step S1011: Obtain a first perception feature based on data acquired by the first sensor.

Step S1012: Obtain a second perception feature based on data acquired by the second sensor.

Step S1013: Perform feature fusion based on the first perception feature and the second perception feature, to obtain a perception fusion feature.

Step S1014: Obtain the target perception result based on the perception fusion feature.

In this implementation, the first perception feature may be obtained based on the data acquired by the first sensor; and the second perception feature may be obtained based on the data acquired by the second sensor. Feature fusion is performed on the first perception feature and the second perception feature, to obtain the perception fusion feature, and then, the target perception result is obtained based on the perception fusion feature. The first sensor and the second sensor may each be one of a camera, a lidar, a millimeter wave radar or another sensor, as long as the types of the first sensor and the second sensor are different.

In an implementation, feature fusion between the first perception feature and the second perception feature may be achieved based on a neural network model.

In an implementation, the neural network model may be a model constructed based on Transformer BEV architecture, a model constructed based on mono 3D, or a model constructed based on occ network, etc.

In an implementation, the target perception result may be obtained based on the perception fusion feature, and state information of the smart device. The state information may include physical state data such as shape parameters, speed, etc.

In an implementation of this embodiment of the disclosure, the environmental map may be obtained based on steps S201 to S203:
Step S201: Obtain environmental data of the station based on the data acquired by the sensors.

Step S202: Obtain static obstacle occupancy data based on the environmental data.

Step S203: Obtain the environmental map based on the static obstacle occupancy data.

In an implementation, the environmental map may also be updated based on the following step S204.

Step S204: Update the environmental map based on backflow data, where the backflow data is data that is acquired by the sensors of the station or the smart device and that is triggered based on a preset rule to flow back.

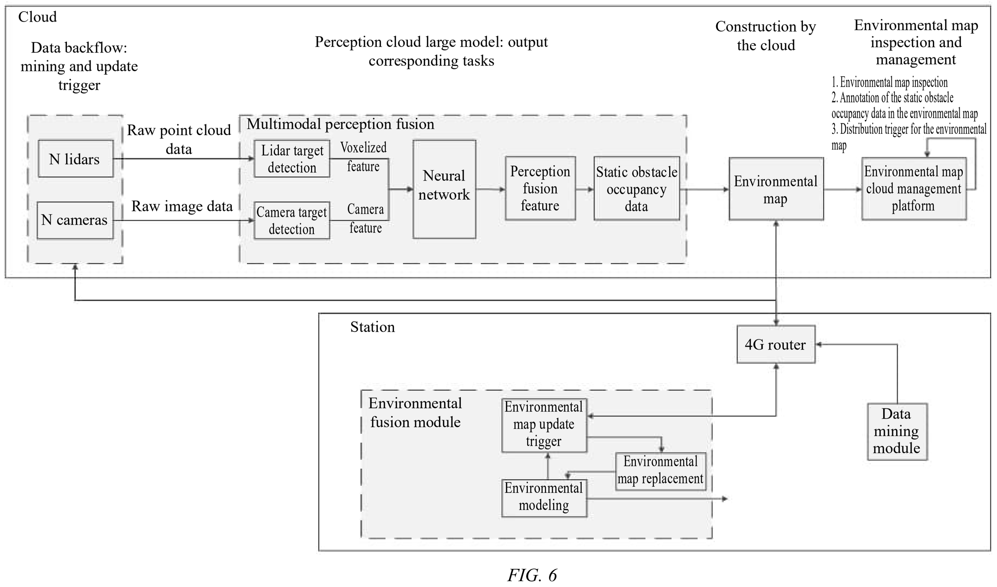

The process of obtaining and updating the environmental map is described below in conjunction with FIG. 6, which is a schematic diagram of a main framework for obtaining the environmental map according to an implementation of an embodiment of the disclosure. As shown in FIG. 6, the sensors set at the station include a camera and a lidar. For example, N cameras and N lidars may be set. The environmental data may be obtained based on raw image data acquired by the camera, and raw point cloud data acquired by the lidars; and perception algorithm-based environmental perception is performed based on the environmental data, thereby obtaining the static obstacle occupancy data. The perception algorithm may be a neural network-based perception algorithm. The perception algorithm specifically refers to performing lidar target detection based on the raw point cloud data, to obtain a voxelized feature, performs camera target detection based on the raw image data, to obtain a camera feature, and performs feature fusion on the voxelized feature and the camera feature through the neural network, to obtain the static obstacle occupancy data. The static obstacle occupancy data may include occupancy data of a static obstacle that cannot move, such as a curb, a wall, and a stump. The environmental map may be obtained based on the static obstacle occupancy data. The environmental map expresses the boundary of the static obstacle. The construction of the environmental map may be implemented by the cloud. A perception cloud large model outputs corresponding static obstacle occupancy data; and an environmental map cloud management platform on the cloud implements environmental map inspection, annotation of the static obstacle occupancy data in the environmental map, and distribution trigger for the environmental map. The station is in communication connection with the cloud, which may be implemented through a 4G router. An environmental fusion module on the station obtains the environmental map from the cloud, or updates and replaces the environmental map, and then performs environmental modeling based on the environmental map, for environmental fusion. The station is further equipped with a data mining module, which is used to trigger data backflow based on the preset rule, so that the data acquired by the sensors of the station or the smart device flows back and is transmitted to the cloud for updating the environmental map. The cloud and station combined environmental map construction and update mechanism can improve the robustness of environmental fusion.

In an implementation of this embodiment of the disclosure, step S103 may further include steps S1031 and S1032 below.

Step S1031: Obtain state data and scheduling data of the smart device.

Step S1032: Perform trajectory planning on the smart device based on the state data, the scheduling data, and the environmental fusion result, to obtain the trajectory planning result.

In this implementation, the state data and scheduling data of the smart device may be obtained, and trajectory planning is performed on the smart device based on the state data, the scheduling data, and the environmental fusion result, to obtain the trajectory planning result. The state data of the smart device may include functional state machine data, and the physical state data such as the shape parameters and the speed, of the smart device.

Trajectory planning may be performed by using a planning and controlling (PNC) algorithm commonly used in the art, which is not limited in the disclosure.

In an implementation of this embodiment of the disclosure, the communication connection between the station and the smart device may be implemented through a wireless link. The wireless link has a time synchronization capability, which can facilitate time synchronization between the station and the smart device through the wireless link, reduce the impact of the wireless link on the transmission process, and the subsequent control process, and improve the performance of consistency between the station and the smart device.

In an implementation, the wireless link is a redundant wireless link, that is, multiple wireless links are implemented through a plurality of different types of wireless communication protocols. The wireless communication protocols may include WiFi, 4G/5G, V2X, etc. By setting up the redundant wireless links, the robustness and real-time performance of communication between the station and the smart device can be further enhanced.

In an implementation of this embodiment of the disclosure, multimodal fusion may be implemented by a multimodal fusion module; environmental fusion may be implemented by an environmental fusion module; and trajectory planning may be implemented by a trajectory planning module. The station can further perform fault monitoring on the sensors, the multimodal fusion module, the environmental fusion module and the trajectory planning model that are set on the station. When a fault occurs on at least one of the sensors, the multimodal fusion module, the environmental fusion module and the trajectory planning model, a fault self-correction mechanism (failsafe) response is initiated, so that the stability monitoring and operation and maintenance of the station can be supported, and fault information corresponding to the fault can be stored. For example, the fault information may be uploaded to the cloud for centralized management, and may be closed-loop with other service capabilities at the station, such as battery swapping operation and maintenance, so as to improve user experience. The fault self-correction mechanism refers to a complete and comprehensive health monitoring, fault diagnosis and fault handling mechanism running at the station, and may include functions of discovering the fault in time and giving an alarm, analyzing and diagnosing the cause of the fault, handling the fault handling in a targeted manner based on the analysis and diagnosis results, and uploading data corresponding to the fault information to the cloud, etc.

In an implementation of this embodiment of the disclosure, the station further has a sensor calibration capability. That is, offline calibration or online calibration may be performed on the sensors set at the station, so as to obtain extrinsic parameter calibration results of the sensors, so that the extrinsic parameter calibration results can be used in multimodal perception fusion and environmental fusion. Since the station has the sensor calibration capability, the situation that the sensors are affected by factors such as thermal deformation of a bracket, and strong winds, which causes changes in the extrinsic parameters of the sensors is avoided, and effective correction and over-tolerance protection can be performed for the above situation, thereby ensuring the robustness of multimodal perception fusion and environmental fusion.

In an implementation, the station may further implement registration calculation between an offline point cloud map and point cloud data acquired in real time, to correct an extrinsic parameter variation error between a time of acquiring the point cloud data and a current time, so as to obtain a more accurate target perception result.

In an implementation, a cloud management device may be used to implement OTA upgrades of software, fault operation and maintenance management, upgrades and management of an offline environmental map, key data backhaul, cloud-based training of models, etc.

Further, the disclosure provides another autonomous driving method.

Referring to FIG. 2, which is a schematic flowchart of main steps of an autonomous driving method according to another embodiment of the disclosure. As shown in FIG. 2, the autonomous driving method in this embodiment is applied to a smart device. The autonomous driving method may include the following steps S301 to S302.

Step S301: Obtain a trajectory planning result of the smart device that is sent by a station, where the station is in communication connection with the smart device.

In this implementation, the smart device can directly obtain the trajectory planning result sent by the station.

Step S302: Perform driving control on the smart device based on the trajectory planning result, and a safety guard decision result of the smart device, to implement an autonomous driving function of the smart device, where the safety guard decision result is a result obtained after the smart device performs evaluation and verification of the safety control on the trajectory planning result.

In this implementation, a safety guard algorithm may be deployed at the smart device to implement safety protection handling of the smart device side, thereby making it possible to perform driving control based on the trajectory planning result sent by the station, and the safety guard decision result obtained based on the safety guard algorithm. The safety guard algorithm is an algorithm for performing evaluation and verification of the safety control on the trajectory planning result. If the trajectory planning result does not meet safety control instruction requirements of the smart device, the trajectory planning result is blocked, and safety protection handling of the smart device is performed; and if the trajectory planning result meets the requirements of the safety control instruction requirements of the smart device, driving control is performed based on the trajectory planning result. Safety protection handling may include emergency braking, emergency avoidance, etc.

In an implementation, the safety guard algorithm may be a responsibility sensitive safety (RSS) algorithm or a safety force field (SFF) algorithm, and the safety guard decision result of the smart device may be obtained based on the RSS algorithm or the SFF algorithm.

Based on the above steps S301 to S302, the smart device in this embodiment of the disclosure can implement the autonomous driving function simply by deploying a safety guard module capable of obtaining the safety guard decision result, and obtaining the trajectory planning result sent by the station, thereby effectively implementing the lightweight deployment of resources and algorithms on the smart device while ensuring the safety protection of the smart device.

Step S302 is further described below.

In an implementation of this embodiment of the disclosure, step S302 may further include the following steps S3021 and S3022.

Step S3021: Perform priority judgment based on the trajectory planning result, and the safety guard decision result of the smart device, to obtain a priority judgment result.

In this implementation, priority judgment may be performed on the trajectory planning result and the safety guard decision result.

Step S3022: Perform driving control on the smart device based on the priority judgment result, and odometry fusion positioning data of the smart device.

In this implementation, step S3022 may further include the following steps S30221 to S30222.

Step S30221: Perform driving control on the smart device based on the trajectory planning result and the odometry fusion positioning data, when the priority of the trajectory planning result is higher than the priority of the safety guard decision result.

In this implementation, the smart device is in communication connection with the station through a wireless link, which has a time synchronization capability. When the priority of the trajectory planning result is higher than that of the safety guard decision result, it indicates that the trajectory planning result sent by the station has passed the evaluation and verification of the safety control of the smart device, and driving control can be performed on the smart device based on the trajectory planning result. Time synchronization may be performed on the trajectory planning result based on the wireless link to implement consistency performance between the station and the smart device, and then, driving control is performed based on the trajectory planning result after time synchronization, and the odometry fusion positioning data. The odometry fusion positioning data is obtained by fusing the positioning result of the smart device that is observed by the station with local odometry obtained through wheel speed and IMU.

In an implementation, the trajectory planning result may include a planned trajectory and real-time pose of the smart device. Motion compensation may be performed on the real-time pose after time synchronization based on the odometry fusion positioning data, to obtain a compensated planned trajectory; and driving control is performed on the smart device based on the compensated real-time pose, and the planned trajectory after time synchronization. With time synchronization and motion compensation, the driving control process of the smart device is more precise, thereby achieving high-performance autonomous driving capability.

Step S30222: Perform driving control on the smart device based on the safety guard decision result and the odometry fusion positioning data, when the priority of the safety guard decision result is higher than the priority of the trajectory planning result.

In this implementation, when the priority of the safety guard decision result is higher than the priority of the trajectory planning result, it is indicated that the trajectory planning result does not pass the evaluation and verification of the safety control of the smart device, driving control cannot be performed on the smart device based on the trajectory planning result, and there may be cases where the trajectory planning result is invalid, etc. In this case, driving control such as emergency braking needs to be performed on the smart device based on the safety guard decision result and the odometry fusion positioning data.

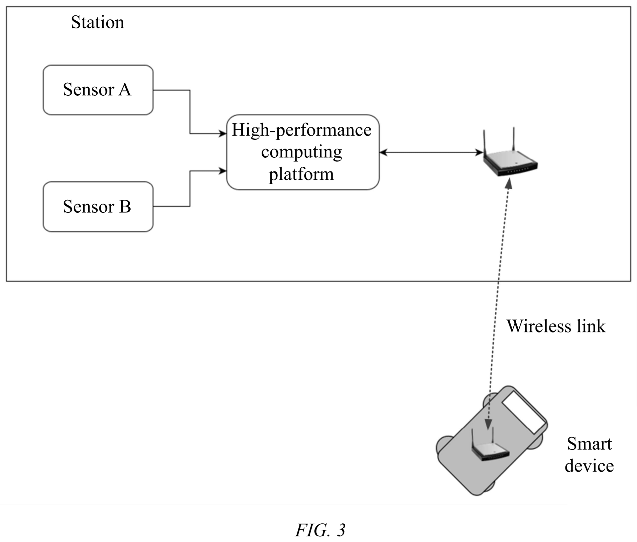

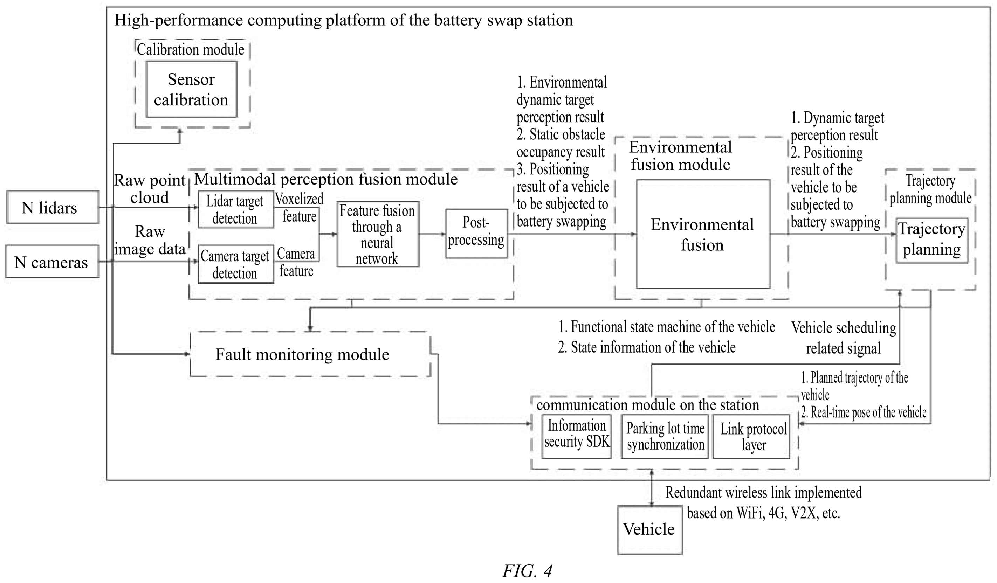

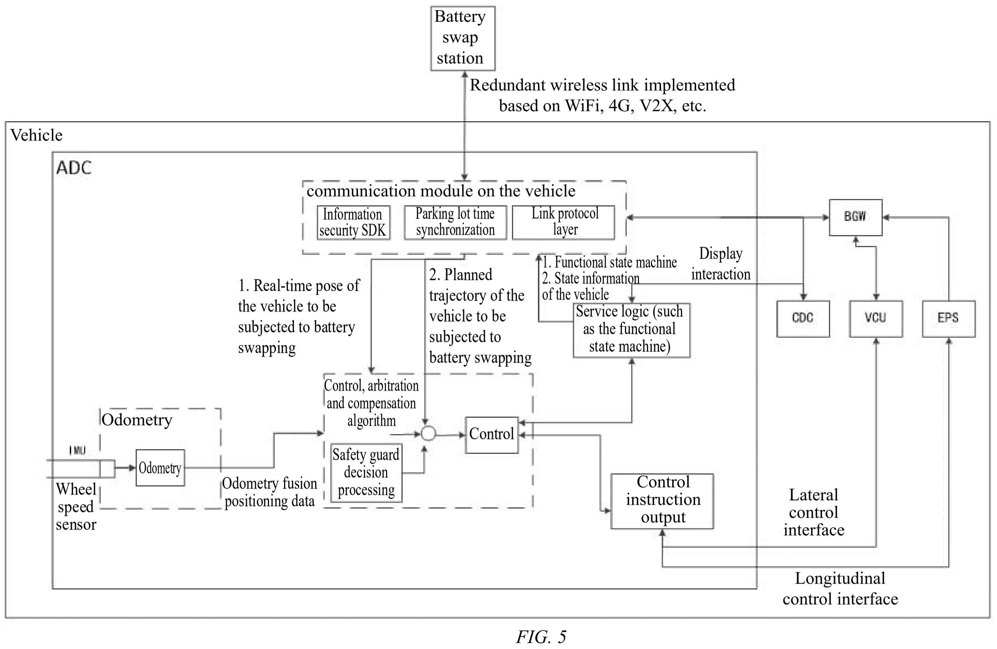

As an example, the station is a battery swap station, and the smart device is a vehicle. The autonomous driving method of the disclosure is described with reference to FIGS. 3 to 5 below. FIG. 3 is a schematic diagram of main hardware topology between the station and the smart device according to an implementation of an embodiment of the disclosure; FIG. 4 is a schematic diagram of main software architecture of the battery swap station according to an implementation of an embodiment of the disclosure; and FIG. 5 is a schematic diagram of main software architecture of the vehicle according to an implementation of an embodiment of the disclosure.

As shown in FIG. 3, sensors A and B may be deployed at the battery swap station, and a trajectory planning result of the vehicle is obtained by using a high-performance computing platform based on data acquired by the sensors A and B, and is sent to the vehicle through a wireless link.

As shown in FIG. 4, the high-performance computing platform of the battery swap station may include a calibration module, a multimodal perception fusion module, an environmental fusion module, a trajectory planning module, a fault monitoring module, and a station side communication module.

The multimodal perception fusion module performs lidar target detection based on raw point cloud acquired by n lidars that are set at the battery swap station, to obtain a voxelized feature, performs camera target detection based on raw image data acquired by n cameras that are set at the battery swap station, to obtain a camera feature, and performs feature fusion on the voxelized feature and the camera feature through the neural network, and post-processing, to obtain a field-side target perception result, where the field-side target perception result may include an environmental dynamic target perception result, a static obstacle occupancy result, and a positioning result of a vehicle to be subjected to battery swapping.

The environmental fusion module performs environmental fusion based on an environmental map and the field-side target perception result, to obtain a field-side environmental fusion result, where the field-side environmental fusion result may include the dynamic target, and the positioning result of the vehicle to be subjected to battery swapping.

The trajectory planning module performs trajectory planning based on the field-side environmental fusion result, state information of a functional state machine of the vehicle, and the vehicle, and scheduling information of the vehicle, to obtain a trajectory planning result, where the trajectory planning result may include a planned trajectory and real-time pose of the vehicle to be subjected to battery swapping.

The station-side communication module includes an information security SDK, parking lot time synchronization, and a link protocol layer. The station-side communication module implements communication connection with the vehicle based on a redundant wireless link, which may be a communication link implemented based on communication protocols such as WiFi, 4G, and V2X. The parking lot time synchronization is used to implement time synchronization between the battery swap station and the vehicle.

The fault monitoring module is used to perform fault diagnosis on the sensors, and hardware, algorithms and architecture of the high-performance computing platform.

The calibration module is used to calibrate the sensors (cameras, lidars, etc.).

As shown in FIG. 5, an autonomous driving controller (ADC) of the vehicle includes a communication module on the vehicle, a control, arbitration and compensation algorithm module, and an odometry.

The communication module on the vehicle includes an information security SDK, parking lot time synchronization, and a link protocol layer. The communication module on the vehicle is in communication connection with the communication module on the station through a redundant communication link, obtains a trajectory planning result from the battery swap station, sends the trajectory planning result to the control, arbitration and compensation algorithm module, obtains scheduling information of the vehicle, and the state information of the functional state machine of the vehicle, and the vehicle, and sends the above information to the battery swap station, where the trajectory planning result may include a planned trajectory and real-time pose of the vehicle to be subjected to battery swapping.

The odometry performs relative positioning based on data of an IMU and wheel speed sensor of the vehicle, to obtain odometry fusion positioning data of the vehicle.

The control, arbitration and compensation algorithm module includes a safety guard decision processing module and a control module. Driving control is performed on the vehicle based on the trajectory planning result, the safety guard decision result, and the odometry fusion positioning data.

Driving control of the vehicle can be fed back to the battery swap station through a service logic module (such as the functional state machine) via the vehicle terminal communication module. For example, the state information of the functional state machine of the vehicle, and the vehicle can be fed back. Meanwhile, fault diagnosis instructions on the station may also be sent to the service logic module through the communication module on the vehicle. The service logic module can perform display interaction based on a touch screen interactive device (CDC).

A driving control instruction of the vehicle can send control signals to a lateral control interface and longitudinal control interface of the vehicle through a control instruction output, where the lateral control interface is connected to an electronic power steering system (VCU), and the longitudinal control interface is connected to an electronic power steering system (EPS).

The VCU and the EPS are both connected to the communication module on the vehicle via a central gateway (BGW). The CDC is also connected to the communication module on the vehicle.

It should be noted that, although the steps are described in a particular sequence in the above embodiments, a person skilled in the art may understand that, to implement the effects of the disclosure, different steps are not necessarily performed in such a sequence, and the steps may be performed simultaneously (in parallel) or in another sequence. These changes fall within the protection scope of the disclosure.

A person skilled in the art may understand that all or some of the procedures in the methods in the above embodiments of the disclosure may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

The disclosure further provides a computer-readable storage medium. In an embodiment of the computer-readable storage medium according to the disclosure, the computer-readable storage medium may be configured to store a program for performing the autonomous driving method in the above method embodiments, and the program may be loaded and run by a processor to implement the above autonomous driving method. For ease of description, only parts related to the embodiments of the disclosure are shown. For specific technical details that are not disclosed, refer to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

Further, the disclosure provides a station server, which may include at least one processor; and a memory in communication connection with the at least one processor, where the memory stores a computer program, which, when executed by the at least one processor, implements the method described in any of the above embodiments.

In some embodiments of the disclosure, the station server is connected to a plurality of sensors set at a station, where the sensors are used to sense information. The sensors are in communication connection with any type of processor of the station server.

In an implementation, the memory of the station server is in communication connection with the processor by a bus.

Further, the disclosure provides a smart device. The smart device may include at least one processor; and a memory in communication connection with the at least one processor, where the memory stores a computer program, which, when executed by the at least one processor, implements the method described in any of the above embodiments. The smart device described herein may include a driving device, a smart car, a robot, etc.

In some embodiments of the disclosure, the smart device further includes at least one sensor for sensing information. The sensor is in communication connection with any type of processor of the smart device. Optionally, the smart device further includes an autonomous driving system for guiding the smart device to drive autonomously or assisting in driving. The processor is in communication with the sensor and/or the autonomous driving system, for performing the method described in any of the above embodiments.

In an implementation, the memory and the processor of the smart device are in communication connection by a bus.

Further, the disclosure further includes an autonomous driving system. The autonomous driving system includes the station server in the station server embodiment, and the smart device in the smart device embodiment. The station server is in communication connection with the smart device.

Further, it should be understood that, since the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

The related user personal information that may be involved in the embodiments of the disclosure is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed in the disclosure varies depending on the specific product/service scenario, and shall be subject to the specific scenario in which the user uses the product/service. It may involve account information, device information, driving information, vehicle information, or other related information of the user. The applicant treats and handles the user personal information with a high degree of diligence.

The disclosure attaches great importance to the security of the user personal information, and reasonable and feasible security protection measures that comply with industry standards have been taken to protect information of the user and prevent the personal information from unauthorized access, public disclosure, use, modification, damage or loss.

Heretofore, the technical solutions of the disclosure have been described in combination with the preferred implementations shown in accompanying drawings. However, those skilled in the art can readily understand that the scope of protection of the disclosure is apparently not limited to these particular implementations. Those skilled in the art can make equivalent changes or substitutions to the related technical features without departing from the principle of the disclosure, and all the technical solutions with such changes or substitutions shall fall within the scope of protection of the disclosure.

## Claims

1. An autonomous driving method, wherein the method is applied to a station, and comprises:
performing multimodal perception fusion based on data acquired by at least two types of sensors that are set at the station, to obtain a target perception result, wherein the perception result contains a smart device to be subjected to trajectory planning, and the smart device is in communication connection with the station;
performing environmental fusion based on the target perception result and an environmental map, to obtain an environmental fusion result;
performing trajectory planning on the smart device based on the environmental fusion result, to obtain a trajectory planning result of the smart device; and
sending the trajectory planning result to the smart device, so that the smart device implements an autonomous driving function based on the trajectory planning result.

2. The autonomous driving method according to claim 1, wherein
the performing trajectory planning on the smart device based on the environmental fusion result, to obtain a trajectory planning result of the smart device comprises:
obtaining state data and scheduling data of the smart device; and
performing trajectory planning on the smart device based on the state data, the scheduling data, and the environmental fusion result, to obtain the trajectory planning result.

3. The autonomous driving method according to claim 2, wherein
the obtaining the trajectory planning result comprises:
obtaining a planned trajectory and real-time pose of the smart device.

4. The autonomous driving method according to claim 1, wherein the method further comprises:
implementing communication connection between the station and the smart device through a wireless link,
wherein the wireless link has a time synchronization capability.

5. The autonomous driving method according to claim 4, wherein the wireless link is a redundant wireless link; and the method further comprises:
implementing the redundant wireless link based on a plurality of different types of wireless communication protocols.

6. The autonomous driving method according to claim 1, wherein the multimodal fusion is implemented by a multimodal fusion module; the environmental fusion is implemented by an environmental fusion module; and the trajectory planning is implemented by a trajectory planning module; and the method further comprises:
performing fault monitoring on the sensors, the multimodal fusion module, the environmental fusion module, and the trajectory planning module; and
initiating a fault self-correction mechanism response when a fault occurs on at least one of the sensors, the multimodal fusion module, the environmental fusion module, and the trajectory planning module, and storing fault information corresponding to the fault.

7. The autonomous driving method according to claim 1, wherein the sensors comprise a plurality of first sensors and a plurality of second sensors; and
the performing multimodal perception fusion based on data acquired by at least two types of sensors that are set at the station, to obtain a target perception result comprises:
obtaining a first perception feature based on the data acquired by the first sensors;
obtaining a second perception feature based on the data acquired by the second sensors;
performing feature fusion based on the first perception feature and the second perception feature, to obtain a perception fusion feature; and
obtaining the target perception result based on the perception fusion feature.

8. The autonomous driving method according to claim 7, wherein
the obtaining the target perception result comprises:
obtaining the environmental dynamic target perception result, a static obstacle occupancy result, and a positioning result of the smart device based on the perception fusion feature.

9. The autonomous driving method according to claim 1, wherein
the method further comprises obtaining the environmental map based on the following steps:
obtaining environmental data of the station based on the data acquired by the sensors;
obtaining static obstacle occupancy data based on the environmental data; and
obtaining the environmental map based on the static obstacle occupancy data.

10. The autonomous driving method according to claim 9, wherein the method further comprises:
updating the environmental map based on backflow data,
wherein the backflow data is data that is acquired by the sensors of the field side or the smart device and that is triggered based on a preset rule to flow back.

11. The autonomous driving method according to claims 1 to 10, wherein the method further comprises:
performing offline calibration or online calibration on the sensors, to obtain extrinsic parameter calibration results of the sensors,
wherein the extrinsic parameter calibration results are used in the multimodal perception fusion and/or the environmental fusion.

12. An autonomous driving method, wherein the method is applied to a smart device, and comprises:
obtaining a trajectory planning result of the smart device that is sent by a station, wherein the station is in communication connection with the smart device; and
performing driving control on the smart device based on the trajectory planning result, and a safety guard decision result of the smart device, to implement an autonomous driving function of the smart device,
wherein the safety guard decision result is a result obtained after the smart device performs evaluation and verification of safety control on the trajectory planning result.

13. The autonomous driving method according to claim 12, wherein
the performing driving control on the smart device based on the trajectory planning result, and a safety guard decision result of the smart device comprises:
performing priority judgment based on the trajectory planning result, and the safety guard decision result of the smart device, to obtain a priority judgment result; and
performing driving control on the smart device based on the priority judgment result, and odometry fusion positioning data of the smart device.

14. The autonomous driving method according to claim 13, wherein
the performing driving control on the smart device based on the priority judgment result, and odometry fusion positioning data of the smart device comprises:
performing driving control on the smart device based on the trajectory planning result and the odometry fusion positioning data, when a priority of the trajectory planning result is higher than the priority of the safety guard decision result; and
performing driving control on the smart device based on the safety guard decision result and the odometry fusion positioning data, when the priority of the safety guard decision result is higher than the priority of the trajectory planning result.

15. The autonomous driving method according to claim 14, wherein
the smart device is in communication connection with the station through a wireless link, wherein the wireless link has a time synchronization capability; and
the performing driving control on the smart device based on the trajectory planning result and the odometry fusion positioning data comprises:
performing time synchronization on the trajectory planning result through the wireless link; and
performing driving control on the smart device based on the trajectory planning result after time synchronization, and the odometry fusion positioning data.

16. The autonomous driving method according to claim 15, wherein
the trajectory planning result comprises a planned trajectory and real-time pose of the smart device; and
the performing driving control on the smart device based on the trajectory planning result after time synchronization, and the odometry fusion positioning data comprises:
performing motion compensation on the real-time pose after time synchronization based on the odometry fusion positioning data, to obtain a compensated real-time pose; and
performing driving control on the smart device based on the compensated real-time pose, and the planned trajectory after time synchronization.

17. The autonomous driving method according to claim 15 or 16, wherein
the wireless link is a redundant wireless link; and the method further comprises:
implementing the redundant wireless link based on a plurality of different types of wireless communication protocols.

18. A computer-readable storage medium, storing a plurality of pieces of program code, wherein the program code is adapted to be loaded and run by a processor to perform the autonomous driving method according to any one of claims 1 to 11, or the autonomous driving method according to any one of claims 12 to 17.

19. A station server, wherein the station server comprises:
at least one processor,
and a memory in communication connection with the at least one processor,
wherein the memory stores a computer program, which, when executed by the at least one processor, implements the autonomous driving method according to any one of claims 1 to 11.

20. A smart device, comprising:
at least one processor,
and a memory in communication connection with the at least one processor,
wherein the memory stores a computer program, which, when executed by the at least one processor, implements the autonomous driving method according to any one of claims 12 to 17.

21. An autonomous driving system, comprising the field-side server according to claim 19, and the smart device according to claim 20, wherein the field-side server is in communication connection with the smart device.
